# EUROPÄISCHE PATENTANMELDUNG

(11) **EP 3 072 426 A1**
(43) Veröffentlichungstag der Anmeldung: **28.09.2016**
(21) Anmeldenummer: 16161639.6
(22) Anmeldetag: 22.03.2016
(51) Int. Cl.: A47J 31/44, A47J 31/40

(54) **VORRICHTUNG ZUR HERSTELLUNG EINES KAKAOHALTIGEN GETRÄNKS SOWIE ZUGEHÖRIGES VERFAHREN**

(30) Priorität: 23.03.2015 DE 102015104303
(71) Anmelder: TwistCon Systems GmbH, 52068 Aachen (DE)
(72) Erfinder: Akbari Aid Gahi, Kijan, 50127 Bergheim (DE); Schreiber, Fabian, 52249 Eschweiler (DE); Schreiber, Felix, 41472 Neuss (DE); Stypa, Oliver, 50823 Köln (DE); Kus, Roman, 52070 Aachen (DE); Schäfer, Dieter, 53343 Wachtberg (DE)
(74) Vertreter: Bauer, Dirk

(57) **Zusammenfassung**

Die vorliegende Erfindung betrifft eine Vorrichtung (1) zur Herstellung eines kakaohaltigen Heißgetränks, umfassend mindestens einen Vorratsbehälter (5), in dem eine in festem Zustand vorliegende Schokoladenzubereitung bevorratbar et ist, mindestens eine Fördereinrichtung (2) zur zumindest mittelbaren Förderung einer Portion der Schokoladenzubereitung in mindestens ein Mischgefäß (6), mindestens eine Dampfquelle (3) zur Bereitstellung eines Dampfvolumenstroms, sowie mindestens eine Dampfleitung (21) zur Leitung des Dampfvolumenstroms in Richtung des Mischgefäßes (6), wobei zumindest die in dem Mischgefäß (6) befindliche Portion der Schokoladenzubereitung von einer Mehrzahl zählbarer Schokoladenelemente gebildet ist.

Um eine Vorrichtung sowie ein Verfahren bereitzustellen, mittels dessen zählbare Schokoladenelemente zuverlässig dosierbar sind, sodass eine vorzugsweise vollautomatische Herstellung eines kakaohaltigen Getränks bewerkstelligt werden kann, wird erfindungsgemäß vorgeschlagen, dass die Fördereinrichtung (2) mindestens ein Förderelement (8) aufweist, auf dem eine Mehrzahl von Schokoladenelementen lagerbar ist, wobei das Förderelement (8) derart in eine Schwingung versetzbar ist, dass die Schokoladenelemente förderbar sind.

Weiterhin umfasst die vorliegende Erfindung ein Verfahren zum Betrieb einer derartigen Vorrichtung.

## Beschreibung

### Einleitung

Die vorliegende Erfindung betrifft ein Verfahren zur Herstellung eines kakaohaltiges Heißgetränks mittels einer Vorrichtung, die Vorrichtung umfassend mindestens einen Vorratsbehälter zur Bevorratung einer in festem Zustand vorliegenden Schokoladenzubereitung, mindestens eine Fördereinrichtung zur zumindest mittelbaren Förderung mindestens einer Portion der Schokoladenzubereitung in ein Mischgefäß, mindestens eine Dampfquelle zur Bereitstellung eines Dampfvolumenstroms, sowie mindestens eine Dampfleitung zur Leitung des Dampfvolumenstroms in Richtung des Mischgefäßes, aufweisend die folgenden Verfahrensschritte:
a) Ausgehend von dem Vorratsbehälter wird die Portion der Schokoladenzubereitung mittels der Fördereinrichtung in das Mischgefäß gefördert.
b) Ausgehend von der Dampfquelle wird der Dampfvolumenstrom mittels der Dampfleitung in Richtung des Mischgefäßes geleitet.
c) Zumindest ein Teil der Portion der Schokoladenzubereitung wird zumindest mittelbar mittels des Dampfvolumenstroms erwärmt und dadurch aufgeschmolzen, sodass zumindest besagter Teil der Portion ausgehend von seinem festen Zustand in einen flüssigen Zustand überführt wird.

Weiterhin betrifft die vorliegende Anmeldung eine Vorrichtung zur Herstellung eines kakaohaltigen Heißgetränks, umfassend mindestens einen Vorratsbehälter, in dem eine in festem Zustand vorliegende Schokoladenzubereitung bevorratet ist, mindestens eine Fördereinrichtung zur zumindest mittelbaren Förderung einer Portion der Schokoladenzubereitung in mindestens ein Mischgefäß, mindestens eine Dampfquelle zur Bereitstellung eines Dampfvolumenstroms sowie mindestens eine Dampfleitung zur Leitung des Dampfvolumenstroms in Richtung des Mischgefäßes, wobei zumindest die in dem Mischgefäß befindliche Portion der Schokoladenzubereitung von einer Mehrzahl zählbarer Schokoladenelemente gebildet ist.

Unter "Schokolade" und "schokoladehaltig" wird im Sinne der vorliegenden Anmeldung jede Art von Lebensmittel verstanden, das einen Kakaoanteil hat. Zwar fallen fast alle für ein herzustellendes schokoladehaltiges Heißgetränk infrage kommenden kakaohaltigen Produkte unter die EU Richtlinie 2000/36/EG bzw. die in Deutschland geltende Kakao- und Schokoladenverordnung; um als "Schokoladenzubereitung" im Sinne der vorliegenden Anmeldung zu gelten ist dies jedoch nicht zwingend erforderlich. Stattdessen reicht es zur Bezeichnung als Schokoladenzubereitung bereits aus, wenn die Schokoladenzubereitung einen gewissen Kakaoanteil aufweist.

Unter einer "Fördereinrichtung" kann grundsätzlich jede Art von Vorrichtung verstanden werden, die dazu geeignet ist, die Schokoladenzubereitung zu bewegen. Dies kann unmittelbar erfolgen, beispielsweise mittels einer Förderschnecke, oder mittelbar, beispielsweise mittels einer Vibrationsplatte, auf der die Schokoladenzubereitung positioniert ist. Letztere vibriert, regt die Schokoladenzubereitung an und versetzt sie dadurch in Schwingung. Infolge der Schwingung wird die Schokoladenzubereitung in eine gewünschte Richtung "gerüttelt", gegebenenfalls unter Zuhilfenahme einer bestimmten Neigung der Vibrationsplatte. Ebenfalls ist es denkbar, dass zumindest ein Teil der Fördereinrichtung eine "Förderwirkung" durch Wirkung der Schwerkraft erzeugt, beispielsweise indem die Fördereinrichtung zumindest eine Rutsche aufweist, entlang derer ein zu förderndes Schokoladenelement bzw. zumindest ein Teil der Schokoladenzubereitung von einer Hochstelle in Richtung einer Tiefstelle rutschen kann.

Ein "Dampfvolumenstrom" kann grundsätzlich von jedem Medium gebildet werden, das auf seine Siedetemperatur erwärmt wird. Es versteht sich, dass der Dampfvolumenstrom in Verbindung mit dem hier vorliegenden Verfahren sowie der hier vorliegenden Vorrichtung in der Regel von Wasserdampf gebildet ist. Dies ist jedoch nicht zwingend. Alternativ ist beispielsweise ein Dampfvolumenstrom denkbar, der neben Wasser weitere oder ausschließlich andere Anteile enthält, beispielsweise Milchdampf oder dergleichen.

Unter einem "zählbaren Schokoladenelement" wird ein solches Element verstanden, dass in einer zählbaren Form vorliegt. Eine solche ist insbesondere dann gegeben, wenn die einzelnen Elemente optisch "mit bloßem Auge", das heißt ohne technische Hilfsmittel, unterscheidbar sind. Bei einer in Pulverform vorliegenden Schokoladenzubereitung ist eine derartige Unterscheidbarkeit einzelner Elemente beispielsweise nicht gegeben; eine Zählbarkeit könnte hier lediglich mittels eines Mikroskops oder unter Zuhilfenahme ähnlicher technischer Hilfsmittel erreicht werden. Dasselbe gilt für ein in fließfähiger Form vorliegendes Produkt. Letzteres umfasst keine diskret zählbaren Elemente, wobei eine "Schokoladencréme" oder dergleichen keine zählbaren Schokoladenelemente enthält.

### Stand der Technik

Ein Verfahren sowie eine Vorrichtung der eingangs beschriebenen Art sind im Stand der Technik bereits bekannt. Insbesondere sind sogenannte "Kakaomaschinen" bekannt, bei denen ein trockenes Kakaopulver mit Wasser gemischt wird, sodass ein kakao- bzw. schokoladehaltiges Heißgetränk entsteht. Eine derartige Vorrichtung ist beispielsweise dem Dokument DE 60 2005 005 067 T2 entnehmbar. Die Herstellung des Heißgetränks erfolgt automatisch, wobei pulverförmige oder fließfähige Schokolade sowie eine Flüssigkeit einem Mischgefäß zugeleitet werden. In dem Mischgefäß werden die Schokolade und die Flüssigkeit vermischt, wobei sich das Kakaopulver in dem Mischfluid löst. Die Flüssigkeit wird vor ihrer Einleitung in das Mischgefäß mittels eines Dampfvolumenstroms erwärmt, wobei bei einer Zusammenführung des Dampfvolumenstroms und der Flüssigkeit ein Übergang von thermischer Energie von dem Dampfvolumenstrom auf die Flüssigkeit stattfindet. Der Dampfvolumenstrom kann insbesondere von Wasserdampf und die Flüssigkeit von Milch oder Wasser gebildet sein. Die Vorrichtung gemäß der genannten Schrift wird insoweit nicht als gattungsgemäß aufgefasst, als das dort verwandte Kakaopulver keine Schokoladenzubereitung darstellt, die von zählbaren Schokoladenelementen gebildet ist.

Die bekannte Vorrichtung weist den besonderen Vorteil auf, dass die dortige Schokoladenzubereitung besonders einfach portionierbar ist. Insbesondere ist es denkbar, eine gewisse Menge Pulver oder ein gewisses Volumen an fließfähiger Schokolade abzuwiegen und diese abgewogene Menge der Schokoladenzubereitung dem Mischgefäß zuzuführen.

Allerdings hat sich je nach verwendeter Schokoladenzubereitung entweder die Qualität des erzeugten kakaohaltigen Heißgetränks oder die Handhabung der Vorrichtung als nachteilig erwiesen. Im Hinblick auf die Verwendung fließfähiger Schokolade hat sich vor allem herausgestellt, dass sich eine Reinigung der Vorrichtung besonders aufwendig gestaltet. Die alternative Verwendung von kakaohaltigem Pulver führt derweil lediglich zu einem schlechten geschmacklichen Ergebnis.

Des Weiteren ist in der britischen Patentanmeldung GB 2480900 A eine Vorrichtung beschrieben, die feste Schokoladenpartikel verwendet. Diese Schokoladenpartikel werden in ein Aufnahmegefäß gefördert und dort sodann mittels eines heißen Mischfluids aufgeschmolzen, insbesondere mittels heißer Milch. Das Dokument beschreibt zudem, dass für eine besonders gute Durchmischung des Mischfluids mit der aufgeschmolzenen Schokoladenzubereitung ein Dampfvolumenstrom verwendet werden kann. Die bekannte Vorrichtung hat den besonderen Vorteil, dass sie zur Verarbeitung "echter Schokolade" geeignet ist, sodass das Endprodukt, nämlich der fertige Kakao, gegenüber bekannten Pulverzubereitungen eine erheblich verbesserte Qualität erreichen kann.

Die Problematik bei der Verwendung fester, zählbarer Schokoladenpartikel besteht in der zuverlässigen, störungsfreien Förderung derselben. Besagte britische Schrift schlägt beispielsweise vor, die Schokoladenelemente erst aufzuschmelzen und sodann in einem geschmolzenen Zustand zu fördern. Diese Variante hat den Nachteil, dass die zugehörige Vorrichtung besonders aufwendig gereinigt werden muss. Für die Förderung der Schokoladenelemente im festen Zustand macht der Stand der Technik keine Angaben.

### Aufgabe

Der vorliegenden Erfindung liegt die Aufgabe zugrunde, eine Vorrichtung sowie ein Verfahren vorzuschlagen, mittels dessen zählbare Schokoladenelemente zuverlässig dosierbar sind, sodass eine vorzugsweise vollautomatische Herstellung eines kakaohaltigen Getränks bewerkstelligt werden kann.

### Lösung

Die zugrunde liegende Aufgabe wird ausgehend von einer Vorrichtung der eingangs beschriebenen Art erfindungsgemäß dadurch gelöst, dass die Fördereinrichtung mindestens ein Förderelement aufweist, auf dem eine Mehrzahl von Schokoladenelementen lagerbar ist, wobei das Förderelement in eine Schwingung versetzbar ist, sodass die Schokoladenelemente aufgrund der Schwingung gefördert werden.

Die erfindungsgemäße Vorrichtung hat viele Vorteile. Es versteht sich, dass zählbare Schokoladenelemente ein gewisses Volumen und eine gewisse Masse aufweisen. Als zählbare Schokoladenelemente kommen insbesondere Stücke von handelsüblichen Schokoladentafeln infrage. Im Vergleich zu einem im Stand der Technik bekannten Schokoladen- oder Kakaopulver führt die Verwendung derartiger Schokoladenelemente zu einem besonders hochwertigen Heißgetränk, da die Schokolade über einen wesentlich höheren Anteil an Kakaobutter verfügt. Letztere wird bei der Herstellung von Kakaopulver "abgepresst" und somit aus dem Kakao entfernt. Das Kakaopulver hat demzufolge lediglich einen sehr geringen Anteil an Kakaobutter bis hin zu 0 %, was für die Handhabung des Kakaopulvers besonders wichtig ist. Geschmacklich ist der geringe Anteil an Kakaobutter jedoch von erheblichem Nachteil.

Dieser Qualitätsunterschied zwischen der im Stand der Technik und der für die erfindungsgemäße Vorrichtung verwendbaren Schokoladenzubereitungen schlägt sich unmittelbar in der Qualität des jeweils erzeugten Heißgetränks nieder. Letztere ist bei Verwendung der erfindungsgemäßen Vorrichtung erheblich gesteigert. Da zählbare Schokoladenelemente in einer festen Form vorliegen, ist eine Verunreinigung der erfindungsgemäßen Vorrichtung nicht oder lediglich in einem (gegenüber einer Vorrichtung, die fließfähige Schokolade verwendet) stark reduzierten Umfang zu befürchten. Die feste Form der Schokoladenzubereitung ist außerdem für deren Dauerhaftigkeit vorteilhaft. Somit nimmt die Qualität dauerhaft fließfähiger und folglich dauerhaft auf einer hohen Temperatur gehaltener Schokolade mit der Zeit vergleichsweise schnell ab.

Ein weiterer Vorteil der erfindungsgemäßen Vorrichtung kann darin bestehen, dass eine Abmessung von zu verwendender Schokoladenzubereitung anders als im Stand der Technik nunmehr mittels einer Abzählung der jeweils zu verwendenden, zählbaren Schokoladenelemente erfolgen kann. Mithin ist die Verwendung einer Wägezelle oder einer Vorrichtung zur Erfassung eines Volumens der zu verwendenden Schokoladenzubereitung nicht länger nötig. Gleichwohl ist nicht ausgeschlossen, dass die erfindungsgemäße Vorrichtung über eine Wägezelle verfügt. Eine solche kann insbesondere zu Kontrollzwecken an der Vorrichtung angeordnet sein, wie weiter unten näher erläutert ist. Für eine Abmessung mittels Zählung ist es lediglich erforderlich, dass die einzelnen Schokoladenelemente eine zumindest im Wesentlichen gleiche Masse aufweisen. Sollte Masse bei den einzelnen Schokoladenelementen stark unterschiedlich sein, liefert eine Zählung hingegen keine hinreichende Information über eine jeweilig vorliegende Menge der Schokoladenzubereitung. Unter einer gleichen Masse "im Wesentlichen" wird dabei verstanden, dass die einzelnen Schokoladenelemente untereinander eine Massenabweichung von maximal 10 %, vorzugsweise maximal 5 %, aufweisen.

Weiterhin weist die erfindungsgemäße Vorrichtung den besonderen Vorteil auf, dass die einzelnen Schokoladenelemente der Schokoladenzubereitung in ihrem festen Zustand förderbar sind. Ein Aufschmelzen ist nicht erforderlich. Dies liegt darin begründet, dass sich die Schwingung der Fördereinrichtung auf die Schokoladenelemente überträgt, wodurch diese "angetrieben" werden. Als besonders vorteilhaft hat sich herausgestellt, dass sich zwischen den Schokoladenelementen womöglich ausgebildete "Brücken" aufgrund der aufgebrachten Schwingung lösen, sodass eine Förderung einzelner Schokoladenelemente möglich ist, ohne dass es zu einer Verblockung mehrerer Schokoladenelemente kommt. Letzteres ist bei Schokoladenelemente aufgrund der hohen Neigung zum Aneinanderhaften der einzelnen Schokoladenelemente in der Regel zu beklagen.

Vorteilhafterweise ist die Fördereinrichtung von einem Linearförderer gebildet, mittels dessen das Förderelement in eine lineare Schwingung versetzbar ist. Mittels einer derartigen Schwingung ist den einzelnen Schokoladenelementen besonders einfach eine bestimmte Fördereinrichtung aufprägbar. Diese Fördereinrichtung bildet sich in der Regel parallel zu einer Schwingungsrichtung des Linearförderers aus.

Alternativ oder zusätzlich kann die Fördereinrichtung derart ausgebildet sein, dass sie das mindestens eine Förderelement in eine zumindest anteilig vertikale Schwingung versetzt. Mittels einer derartigen Fördereinrichtung werden die einzelnen Schokoladenelemente gewissermaßen "nach oben geschleudert", wobei sie fortwährend in eine geringe Höhe oberhalb einer Oberfläche des Förderelements abheben und sich in der Luft in eine Richtung fortbewegen können. Vorteilhafterweise ist das Förderelement zyklisch um eine horizontale Schwenkachse verschwenkbar, wobei es um die Schwenkachse gewissermaßen entlang eines Kreisbogens bewegt wird. Die Bewegung entlang eines Kreisbogens weist neben einem vertikalen Anteil typischerweise auch einen horizontalen Bewegungsanteil auf, der insbesondere zur Aufprägung einer Bewegungsrichtung der Schokoladenelemente genutzt werden kann. Mit anderen Worten "hüpfen" die Schokoladenelemente in Richtung der horizontalen Schwenkachse.

Beispielsweise ist es vorstellbar, ein Förderelement mit einem magnetischen Aktuator auszustatten, der mit einer Frequenz beispielsweise im Bereich von 10 Hz bis 100 Hz, vorzugsweise 20 Hz bis 80 Hz, weiter vorzugsweise 30 Hz bis 60 Hz, betrieben wird, wobei mittels Aktivierung des Aktuators das Förderelement entgegen der Schwerkraft angehoben wird und sodann infolge der zyklischen Abschaltung des Aktuators aufgrund der Schwerkraft wieder absinkt und der Zyklus sodann von vorne beginnt. Bei Betrieb einer mit einem solchen Förderelement ausgestatteten Fördereinrichtung wird das Förderelement zyklisch auf und ab bewegt und die einzelnen Schokoladenelemente hierdurch angeregt.

In einer besonders vorteilhaften Ausgestaltung der erfindungsgemäßen Vorrichtung wirkt das Förderelement mit mindestens einem Leitelement zusammen, mittels dessen die Schokoladenelemente in eine Richtung leitbar sind, die vorzugsweise von einer Richtung abweicht, in der das Förderelement schwingt, wobei das Leitelement vorzugsweise einem auf dem Förderelement aufstehenden Leitblech gebildet ist, dessen Längsachse mit einer Schwingungsachse der Fördereinrichtung einen Winkel im Bereich von 30° bis 70°, vorzugsweise 35° bis 65°, weiter vorzugsweise 40° bis 60°, einschließt. Vorzugsweise umfasst die Fördereinrichtung in dieser Variante einen Linearförderer, der eine horizontale Schwingung auf das Förderelement überträgt.

Mittels eines derartigen Leitelements ist es besonders einfach möglich, den jeweils zu fördernden Schokoladenelementen einer von der Schwingungsrichtung der Fördereinrichtung abweichende Förderrichtung aufzuprägen. Insbesondere können die Schokoladenelemente mittels des Leitelements in eine seitliche Richtung abgelenkt werden. Auf diese Weise können sie zum Beispiel einzeln ausgehend von dem Förderelement einem anschließenden Bereich der Fördereinrichtung und schließlich dem Mischgefäß zugeführt werden. Für eine Dosierbarkeit der Schokoladenzubereitung ist dies besonders vorteilhaft, da jedes einzelne Schokoladenelement gesondert erfassbar und so eine Menge an zu verwendenden Schokoladenelementen überprüfbar ist.

Weiterhin kann es von besonderem Vorteil sein, wenn die Vorrichtung eine Mehrzahl von Förderelementen aufweist, wobei jeweils ein Förderelement einem Vorratsbehälter zugeordnet ist und wobei vorzugsweise jedes Förderelement derart mit einer umlaufenden Wandung versehen ist, dass auf dem Förderelement befindliche Schokoladenelemente im Zuge einer Förderung in Richtung einer Öffnung leitbar ist, wobei die umlaufende Wandung vorzugsweise abgerundet ausgeführt ist. Unter "abgerundet" ist in diesem Zusammenhang zu verstehen, dass eine Krümmung der Wandung mit Ausnahme einer Stoßkante keine Unstetigkeitsstellen aufweist. Die Stoßkante beschreibt jene Kante, an der gewissermaßen die beiden Enden der Wandung aufeinander stoßen. Mit anderen Worten ist es (mit Ausnahme der Stoßkante) an jeder Stelle der Wandung möglich, eine eindeutige Tangente an die Wandung anzulegen. Die wäre nicht der Fall, wenn die Wandung einen Knick hätte. Folglich ist die Wandung knickfrei. Die Ausführung der Wandung als "umlaufend" bedeutet, dass die auf dem Förderelement befindlichen Schokoladenelemente mittels der Wandung "eingeschlossen" sind, das heißt nicht in eine unbeabsichtigte Richtung von dem Förderelement entweichen können. Um die Schokoladenelemente in eine bestimmte Richtung zu bewegen, verfügt die Wandung über die Öffnung, durch die die Schokoladenelemente hindurchtreten und so das Förderelement verlassen können.

Für eine genaue Dosierbarkeit der zählbaren Schokoladenelemente kann es besonders vorteilhaft sein, die Fördereinrichtung mit mindestens einer Schließeinrichtung auszustatten, mittels derer ein Förderweg der Schokoladenelemente derart versperrbar ist, dass die Schokoladenelemente bei Vorliegen der Schließeinrichtung in ihrer Schließstellung nicht in das Mischgefäß gelangen können. Eine derartige Schließeinrichtung kann insbesondere von einer Art Schieber gebildet ein, der vor eine Förderöffnung schiebbar ist, durch die hindurch die Schokoladenelemente im Übrigen gefördert werden. Auch ist eine Schwenklappe denkbar, die beispielsweise um eine vertikale Schwenkachse bewegbar und zwischen eine Offen- und einer Schließposition bewegbar ist.

In einer besonders vorteilhaften Ausgestaltung weist die erfindungsgemäße Vorrichtung eine Fluidleitung auf, mittels derer ein Mischfluid zumindest in Richtung des Mischgefäßes, vorzugsweise in das Mischgefäß, einleitbar ist. Weiterhin kann es von Vorteil sein, wenn die Vorrichtung zusätzlich über einen Fluidbehälter verfügt, in dem ein Mischfluid vorhaltbar ist. Für die Qualität eines mittels der Vorrichtung erzeugt Heißgetränks ist es besonders vorteilhaft, wenn die Schokoladenzubereitung mit einem Mischfluid gemischt wird. Aus geschmacklichen Gesichtspunkten kommt für dieses Mischfluid vor allem Milch infrage. Dabei spielt es grundsätzlich keine Rolle, ob das Mischfluid von einem externen Fluidbehälter oder von einem an der Vorrichtung ausgebildeten Fluidbehälter zur Verfügung gestellt wird. Je nach Beschaffenheit der verwendeten Schokoladenzubereitung kann die Verwendung eines Mischfluids im Hinblick auf die Konsistenz des späteren Heißgetränks sogar unerlässlich sein. Dies ist insbesondere der Fall, wenn für die Schokoladenzubereitung handelsübliche oder vergleichbare Schokoladenstücke verwendet werden. Dem liegt die Überlegung zugrunde, dass aufgeschmolzene Schokolade als solche zwar fließfähig, jedoch in der Regel nicht trinkbar ist.

Auch ist es grundsätzlich vorstellbar, dass eine Fluidleitung mit der Dampfleitung zusammengeführt ist, bevor die Dampfleitung bzw. die Fluidleitung das Mischgefäß erreicht. Mit anderen Worten ist es für den erfindungsgemäßen Erfolg grundsätzlich unschädlich, wenn der Dampfvolumenstrom im Vorfeld seiner Einleitung in das Mischgefäß mit einem Fluidstrom gemischt wird. Gleichwohl ist es in der Regel zu bevorzugen, den Dampfvolumenstrom und das jeweilige Mischfluid dem Mischgefäß getrennt zuzuleiten.

In einer besonders vorteilhaften Ausgestaltung der erfindungsgemäßen Vorrichtung weisen die Schokoladenelemente jeweils eine Masse von mindestens 0,5 g, vorzugsweise von mindestens 1,0 g, weiter vorzugsweise von mindestens 2,0 g, auf, wobei die Schokoladenelemente vorzugsweise in Form penta- oder hexagonaler Plättchen oder kugelförmig ausgebildet sind. Die Verwendung derartiger Elemente ist für eine Dosierung einer jeweils gewünschten Portion der Schokoladenzubereitung besonders günstig. Die beschriebene Kugelform ist des Weiteren für eine Förderbarkeit der Schokoladenzubereitung vorteilhaft. Es versteht sich, dass kugelförmige Elemente besonders einfach eine Förderstrecke entlang "rollen" können und somit besonders effektiv zwischen einem Startpunkt und einem Endpunkt förderbar sind. Weiterhin haben kugelförmige Schokoladenelemente den Vorteil, dass eine Kontaktfläche, die sich zwischen benachbarten Schokoladenelementen ausbildet, im Wesentlichen punktförmig ausgebildet ist. Im Vergleich dazu können flächige Schokoladenelemente miteinander gewissermaßen "Kontaktflächen" ausbilden, die eine Verbindung einzelner Schokoladenelemente erleichtern, wobei eine solche Verbindung der Schokoladenelemente im Hinblick auf eine Dosierbarkeit und Förderbarkeit derselben unerwünscht ist. Eckig ausgebildete Plättchen haben demgegenüber den Vorteil, dass sie eine eindeutige Ruheposition einnehmen können und nicht dazu neigen, auch noch nach einer Deaktivierung der Fördereinrichtung sich unbeabsichtigter Weise weiterzubewegen bzw. "weiterzurollen".

In einer vorteilhaften Ausgestaltung der erfindungsgemäßen Vorrichtung umfasst selbige eine Mehrzahl von Vorratsbehältern, wobei in den Vorratsbehältern unterschiedliche Schokoladenzubereitungen bevorratet sind und wobei die Fördereinrichtung eine Mehrzahl an Förderbereichen aufweist, wobei zumindest jeweils ein Förderbereich mit jeweils einem Vorratsbehälter zusammenwirkt. Diese Ausführung der Vorrichtung hat den besonderen Vorteil, dass der Nutzer zwischen verschiedenen Schokoladenzubereitungen wählen kann. Auf diese Weise lassen sich besonders einfach unterschiedliche Geschmacksrichtungen des Heißgetränks erzeugen. Weiterhin ist es denkbar, dass zur Herstellung ein und desselben Heißgetränks eine Mischung von Schokoladenelementen verschiedener Schokoladenzubereitungen verwendet wird. Somit könnte beispielsweise eine Portion von Schokoladenzubereitung zur Hälfte von einer ersten und der von einer zweiten Schokoladenzubereitung gebildet werden. Vorteilhafterweise ist jeder der beschriebenen Förderbereiche mittels einer eigenen, vorstehend erläuterten Schließeinrichtung verschließbar. Idealerweise ist bei Vorliegen einer Mehrzahl von Vorratsbehältern jedem Vorratsbehälter ein separat antreibbares Förderelement zugewiesen.

In einer besonders vorteilhaften Ausführungsform umfasst die erfindungsgemäße Vorrichtung mindestens eine Zähleinrichtung, mittels derer eine Anzahl geförderter Schokoladenelemente erfassbar ist, wobei die Zähleinrichtung vorzugsweise von einer Lichtschranke gebildet ist. Mittels einer solchen Zähleinrichtung können einzelne Schokoladenelemente, die zur Bildung einer Portion von Schokoladenzubereitung verwendet werden sollen, automatisch erfasst werden. Die Verwendung einer Lichtschranke ist hierbei insoweit vorteilhaft, als die zugrunde liegende Technik sowohl kostengünstig als auch zuverlässig ist. Zur Anordnung einer solchen Zähleinrichtung ist insbesondere eine Stelle der Fördereinrichtung geeignet, die die einzelnen Schokoladenelemente jeweils passieren, wobei im Zuge dessen die Zähleinrichtung ausgelöst und das jeweilige Schokoladenelement somit erfasst werden.

Mittels des Einsatzes einer Zähleinrichtung kann eine im Stand der Technik verwendete Wägezelle zur Bestimmung einer zu verwendenden Menge von Schokoladenzubereitung an der Vorrichtung entfallen. Gleichwohl kann es von Vorteil sein, die Vorrichtung weiterhin mit einer Wägezelle zu versehen, wobei eine solche Wägezelle vorzugsweise mit dem Mischgefäß zusammenwirken sollte. Eine solche Wägezelle kann zu einer Überprüfung einer mittels der Zähleinrichtung erfassten Menge der Schokoladenzubereitung dienen. Dem liegt die Überlegung zugrunde, dass es in seltenen Fällen vorkommen kann, dass die Zähleinrichtung nicht jedes einzelne Schokoladenelement, das mittels der Fördereinrichtung gefördert wird, tatsächlich erfasst. Um eine Überdosierung an Schokoladenzubereitung zu vermeiden, kann mittels der Wägezelle eine Kontrollwägung durchgeführt werden.

Sofern eine Zähleinrichtung zum Einsatz kommt, kann es weiterhin besonders vorteilhaft sein, wenn die erfindungsgemäße Vorrichtung mindestens eine Logikeinheit umfasst, die mit der Zähleinrichtung verbunden ist und mittels derer die Fördereinrichtung bei Erreichen einer vorgegebenen Portionszahl mittels der Zähleinrichtung erfasster Schokoladenelemente deaktivierbar ist. Es versteht sich, dass mittels einer derartigen Vorrichtung die Portion der Schokoladenzubereitung vollautomatisch dosierbar ist.

Weiterhin kann es besonders vorteilhaft sein, wenn sich die Dampfleitung bis in das Mischgefäß hinein erstreckt, wobei zumindest ein Endabschnitt der Dampfleitung, von dem ausgehend der Dampfvolumenstrom unmittelbar in das Mischgefäß eintritt, mittels einer Antriebseinrichtung bewegbar, insbesondere entlang einer senkrechten Achse verfahrbar, ist. Einer solchen Ausbildung der Dampfleitung liegt die Überlegung zugrunde, dass die zunächst in festem Zustand vorliegende Schokoladenzubereitung vorteilhafterweise aufgeschmolzen wird. Dieses Aufschmelzen kann besonders einfach mittels des Dampfvolumenstroms erfolgen. Dieser verfügt über ausreichend thermische Energie, um eine Schmelztemperatur der Schokoladenzubereitung zu überschreiten und diese somit zu verflüssigen. Weiterhin ergibt sich, dass die aufgeschmolzene Schokoladenzubereitung in der Regel mit einem Mischfluid, insbesondere mit Milch, vermischt werden kann, wodurch das Heißgetränk gebildet wird.

Mittels einer Einleitung des Dampfvolumenstroms in das Mischgefäß kann das Mischfluid nach bzw. während der Aufschmelzung der Schokoladenzubereitung mit dem Mischfluid vermischt werden. Außerdem kann durch die Einleitung des Dampfvolumenstroms in das Mischgefäß das darin befindliche Fluid zusätzlich aufgeschäumt werden. Hierdurch wird zum einen die Temperatur des Getränks weiter erhöht; zum anderen wird der optische Eindruck des Heißgetränks verbessert, da sich infolge des Dampfes an einer Oberfläche des Heißgetränks eine Schaumkrone ausbildet. Ferner unterstützt die fortwährende Einleitung des Dampfvolumenstroms in das Heißgetränk eine Homogenisierung der aufgeschmolzen Schokoladenzubereitung mit dem Mischfluid.

Die beschriebene Bewegbarkeit der Dampfleitung ist dabei insoweit vorteilhaft, als der Dampfvolumenstrom auf unterschiedlichen Höhenniveaus in das Heißgetränk eingeleitet werden kann. Auf diese Weise ist eine Temperatur des Heißgetränks besonders einfach auf einen über die Höhe gleich verteiltes Maß einstellbar. Außerdem kann eine Homogenisierung des Heißgetränks weiter verbessert werden.

Weiterhin kann es besonders vorteilhaft sein, wenn ein Abstand einer unteren Öffnung des Vorratsbehälters zu einer Oberfläche der Fördereinrichtung, mit der die Schokoladenzubereitung nach deren Austreten aus dem Vorratsbehälter in Kontakt kommt, in eine senkrechte Richtung gemessen maximal 30 mm, vorzugsweise maximal 25 mm, weiter vorzugsweise maximal 15 mm, beträgt. Es versteht sich, dass der Vorratsbehälter an einem unteren Ende eine Öffnung aufweist, durch die hindurch die Schokoladenzubereitung aus dem Vorratsbehälter austreten kann. Ausgehend von dem Vorratsbehälter wird die Schokoladenzubereitung vorteilhafterweise mittels der Fördereinrichtung abtransportiert. Die Schokoladenzubereitung sollte demzufolge von dem Vorratsbehälter an die Fördereinrichtung übergeben werden. Dies kann besonders einfach durch Wirkung der Schwerkraft geschehen, indem die Schokoladenzubereitung aus dem Vorratsbehälter unmittelbar auf die Fördereinrichtung bzw. ein Element derselben "fällt". Bei einer solchen Ausführung ist es erforderlich, dass die Schokoladenzubereitung ausgehend von dem Vorratsbehälter seitlich abtransportiert werden muss, wobei sukzessive weitere Schokoladenzubereitung aus dem Vorratsbehälter "nachsackt".

Es hat sich herausgestellt, dass für einen vorteilhaften Abtransport der Schokoladenzubereitung der Abstand zwischen der Öffnung und der jeweiligen Oberfläche der Fördereinrichtung maximal das vorstehend genannte Maß aufweisen sollte. Der Abstand entspricht einer Höhe eines sich zwischen der Öffnung und der Fördereinrichtung ausbildenden Spalts, durch den die einzelnen Schokoladenelemente hindurch treten müssen. Bei der Wahl der Größe des Spalts zu dem genannten Maß können "Verklumpungen" der Schokoladenzubereitung im Wesentlichen vollständig aufgelöst werden, da in der Regel Schokoladenelemente zum Einsatz kommen, deren Abmessungen einen Durchtritt von zwei miteinander verbundenen Schokoladenelementen durch den beschriebenen Spalt nicht erlauben. Die sich zwischen den Schokoladenelementen ausgebildeten Brücken werden schließlich wunschgemäß aufgebrochen und die Schokoladenelemente sodann weiter gefördert.

Ausgehend von einem Verfahren der eingangs beschriebenen Art wird die zugrunde liegende Aufgabe erfindungsgemäß mittels des folgenden Verfahrensschritts gelöst:
d) Zumindest ein Teil der Portion der Schokoladenzubereitung wird dadurch gefördert, dass mindestens ein Förderelement der Fördereinrichtung, auf dem sich zumindest der Teil der Portion befindet, in eine Schwingung versetzt wird.

Das erfindungsgemäße Verfahren bietet viele Vorteile. Insbesondere wird die Schokoladenzubereitung immer erst dann aufgeschmolzen, wenn ein jeweiliges Heißgetränk zur Verfügung gestellt werden soll. Im Vergleich hierzu wird im Stand der Technik typischerweise eine bereits aufgeschmolzene Schokoladenzubereitung vorgehalten. Letztere Vorgehensweise wirkt sich negativ auf die Qualität der Schokoladenzubereitung aus; demgegenüber ist die Aufschmelzung erst bei Bedarf deutlich im Vorteil. Weiterhin ist eine aufgeschmolzene Schokoladenzubereitung auch gegenüber einem im Stand der Technik bekannten Kakaopulver von erheblich höherer geschmacklicher Qualität, da die Schokoladenzubereitung von "echter" Schokolade gebildet sein kann. Somit ist das erfindungsgemäße Verfahren besonders gut geeignet, die der vorliegenden Erfindung zugrunde liegende Aufgabe zu lösen.

Das erfindungsgemäße Verfahren ist weiterhin insoweit von Vorteil, als die Förderung der einzelnen Schokoladenelemente besonders zuverlässig und effizient vonstattengeht. Die Vorteile einer "Vibrationsförderung" bzw. "Schwingungsförderung" sind vorstehend bereits im Zusammenhang mit der erfindungsgemäßen Vorrichtung beschrieben. Insbesondere kann mittels der Schwingung des Förderelements ein "Verklumpen" der einzelnen Schokoladenelemente aufgelöst werden. Dies ist dadurch zu erklären, dass sich zwischen den Schokoladenelemente ausbildende Brücken, durch Wirkung der Vibration aufgebrochen werden, sodass die einzelnen Schokoladenelemente anschließend unabhängig voneinander und frei beweglich vorliegen. Hierbei wird zumindest ein Teil der Portion der Schokoladenzubereitung dadurch gefördert, dass mindestens ein Förderelement der Fördereinrichtung, auf dem sich zumindest der Teil der Portion befindet, in eine Schwingung versetzt wird. Vorzugsweise wird das Förderelement in eine lineare Schwingung versetzt, insbesondere eine horizontale oder eine zumindest anteilig vertikale Schwingung. Die Vorteile derartiger Schwingungen sind vorstehend bereits erläutert.

Die Förderung der Schokoladenelemente gestaltet sich dann als besonders einfach, wenn das Förderelement mit einer Frequenz von mindestens 25 Hz, vorzugsweise von mindestens 30 Hz, weiter vorzugsweise von mindestens 35 Hz, angeregt wird. Die Verwendung dieser Frequenzen hat sich als besonders vorteilhaft herausgestellt. Dies betrifft sowohl eine Förderleistung der Fördereinrichtung als auch eine optimale Auflösung der vorstehend beschriebenen Brücken.

Vorteilhafterweise kann die Frequenz des Förderelements im Laufe eines Betriebs der Vorrichtung verändert werden. Es hat sich herausgestellt, dass höhere Frequenzen des Förderelements für ein Aufbrechen der beschriebenen Brücken besonders von Vorteil sind, für eine Förderung der Schokoladenelemente hingegen eher nachteilig sind. Umgekehrt weist die Fördereinrichtung bei einer Anlegung niedrigerer Frequenzen eine besonders gute Förderleistung auf, während jedoch Verbindungen bzw. Brücken zwischen einzelnen Schokoladenelementen diesen Frequenzen vergleichsweise gut standhalten können. Daher ist eine Anpassbarkeit der Frequenz des Förderelements besonders vorteilhaft, da das Förderelement individuell betrieben werden kann. Insbesondere ist es möglich, die Fördereinrichtung bei Feststellung einer starken "Verklumpung" der Schokoladenelemente für eine gewisse Dauer in einen "Lösbetrieb" zu versetzen und die Frequenz des Förderelements anzuheben. Sobald zumindest ein wesentlicher Teil der Brücken aufgebrochen ist, kann die Frequenz zur besseren Förderung der Schokoladenelemente wieder auf ein normales Maß reduziert werden.

Das erfindungsgemäße Verfahren ist weiterhin dann besonders vorteilhaft, wenn die Schokoladenzubereitung erst in dem Mischgefäß aufgeschmolzen wird. Dies hat den besonderen Vorteil, dass eine Verschmutzung der Vorrichtung mit aufgeschmolzener Schokolade nicht eintritt. Stattdessen wird lediglich das Mischgefäß mit aufgeschmolzener Schokoladenzubereitung beaufschlagt, wobei vorteilhafterweise das Mischgefäß gleichzeitig als Trinkgefäß dient. Eine aufwändige Reinigung der Vorrichtung, wie sie im Stand der Technik unter Verwendung einer aufgeschmolzenen Schokoladenzubereitung regelmäßig notwendig ist, entfällt daher unter Verwendung des erfindungsgemäßen Verfahrens.

Im Hinblick auf die Qualität des zu erzeugenden Heißgetränks ist es weiterhin besonders vorteilhaft, wenn zumindest ein aufgeschmolzener Teil der in dem Mischgefäß befindlichen Schokoladenzubereitung mit einem Mischfluid vermischt wird, wobei das Mischfluid dem Mischgefäß vorzugsweise mittels einer Fluidleitung zugeleitet wird. Bei diesem Mischfluid handelt es sich in aller Regel um Milch. Die Verwendung eines alternativen Mischfluids ist jedoch ohne Weiteres denkbar. Um die Erwartung eines Nutzers an den Geschmack des Heißgetränks zu erfüllen, ist die Mischung der aufgeschmolzenen Schokoladenzubereitung mit einem ergänzenden Mischfluid von besonderer Bedeutung, da bei der Bestellung eines Kakaos oder einer heißen Schokolade ein Mischgetränk erwartet, dass von einer Schokoladenzubereitung und einem Mischfluid gebildet ist, insbesondere unter der Verwendung von Milch.

Vorteilhafterweise wird das Mischfluid dem Mischgefäß ausgehend von einem externen Fluidbehälter zugeleitet, wobei der Dampfvolumenstrom und das Mischfluid dem Mischgefäß separat zugeleitet werden. Hierfür verfügt die erfindungsgemäße Vorrichtung vorteilhafterweise über eine Fluidleitung, mittels derer das Mischfluid in das Mischgefäß einleitbar ist. Alternativ kann es ebenso möglich sein, dass der Dampfvolumenstrom und das Mischfluid bereits im Vorfeld einer Einleitung in das Mischgefäß miteinander vermischt werden und anschließend in Form eines Mischvolumenstroms gemeinsam in das Mischgefäß eingeleitet werden. Unter dem Aspekt allerdings, dass der Dampfvolumenstrom auch dazu verwendet werden kann, das Heißgetränk aufzuschäumen und mit einer Schaumkrone zu versehen, ist eine gemeinsame Einleitung des Dampfvolumenstroms zusammen mit dem Mischfluid eher als nachteilig zu betrachten.

Bevorzugt wird dem Mischgefäß zuerst die Portion der Schokoladenzubereitung, das heißt die einzelnen Schokoladenelemente, anschließend das Mischfluid und als letztes der Dampfvolumenstrom zugeleitet. Bei Verwendung dieser Reihenfolge wird sichergestellt, dass gleichzeitig mit der Erwärmung der Schokoladenzubereitung eine Vermischung derselben mit dem Mischfluid stattfindet, da sowohl die Schokoladenzubereitung als auch das Mischfluid bei Einleitung des Dampfvolumenstroms bereits in dem Mischgefäß vorhanden sind. Insoweit kann der Dampfvolumenstrom eine Doppelfunktion erfüllen: er dient nämlich sowohl der Aufschmelzung der Schokoladenzubereitung als auch der Vermischung der Schokoladenzubereitung mit dem Mischfluid. Weiterhin kann unmittelbar während der Vermischung einer als optisch ansprechend empfundene Schaumkrone auf dem Heißgetränks erzeugt werden.

In einer besonders vorteilhaften Ausgestaltung des erfindungsgemäßen Verfahrens findet ein Aufschmelzen zumindest eines Teils der Portion der Schokoladenzubereitung zumindest teilweise gleichzeitig mit einer Vermischung aufgeschmolzener Teile der Portion mit einem Mischfluid statt, wobei vorzugsweise sowohl das Aufschmelzen als auch das Vermischen mittels einer Einleitung des Dampfvolumenstroms in das Mischgefäß vorgenommen werden. Der Vorteil dieses Vorgehens ist vorstehend bereits beschrieben.

Sofern die Schokoladenzubereitung von einer Mehrzahl einzelner zählbarer Schokoladenelemente gebildet ist, kann es besonders von Vorteil sein, wenn eine Anzahl von Schokoladenelementen, die zur Bildung einer Portion in das Mischgefäß gefördert werden, erfasst wird, wobei vorzugsweise die Fördereinrichtung bei Erreichen einer vorgegebenen Portionszahl zu fördernder Schokoladenelemente deaktiviert wird. Mittels einer solchen Erfassung ist es ohne Weiteres möglich, eine Portion der Schokoladenzubereitung automatisch abzufüllen und in das Mischgefäß einzuleiten. Wie bereits vorstehend erläutert, ist es hierfür lediglich erforderlich, dass die einzelnen Schokoladenelemente im Wesentlichen dieselbe Masse aufweisen. Anderenfalls könnte aus der Information der jeweils vorhandenen Anzahl an Schokoladenelementen kein Rückschluss auf eine in dem Mischgefäß vorhandene Schokoladenmenge gezogen werden.

Das erfindungsgemäße Verfahren kann überdies dann besonders von Vorteil sein, wenn eine in dem Mischgefäß zu bildende Portion von Schokoladenzubereitung von einer Mischung mehrerer Teilportionen unterschiedlicher Schokoladenzubereitungen gebildet wird, wobei vorzugsweise nacheinander jeweils eine Teilportion einer Schokoladenzubereitung in das Mischgefäß gefördert wird. Unter Anwendung dieses Verfahrens ist es denkbar, ein Heißgetränk von unterschiedlichen Schokoladenzubereitungen zu bilden. Beispielsweise ist ein Heißgetränk erzeugbar, dessen Portion der Schokoladenzubereitung zu einem Drittel von Vollmilchschokolade und zu zwei Dritteln von weißer Schokolade gebildet ist. Mit anderen Worten kann unter Anwendung dieses Verfahrens besonders schnell und einfach ein Mischgetränk erzeugt werden; insbesondere sind verschiedene Mischungsverhältnisse programmierbar, sodass mit ein und derselben Vorrichtung eine fast beliebige Vielzahl verschiedener Heißgetränke erzeugbar ist.

Sofern der Dampfvolumenstrom direkt in das Mischgefäß geleitet wird, kann es von Vorteil sein, wenn eine Austrittsöffnung der Dampfleitung, durch die hindurch der Dampfvolumenstrom unmittelbar in das Mischgefäß eingeleitet wird, in dem Mischgefäß bewegt wird, vorzugsweise während einer Einleitung des Dampfvolumenstroms in das Mischgefäß, wobei sich vorzugsweise durch die Bewegung der Austrittöffnung ein senkrecht gemessener Abstand zwischen einem Boden des Mischgefäßes und der Austrittöffnung vergrößert. Die Vorteile eines solchen Vorgehens sind vorstehend bereits erläutert. Somit erlaubt die Bewegung der Austrittsöffnung eine homogene Erwärmung sowie homogene Durchmischung des Heißgetränks.

### Ausführungsbeispiele

Die erfindungsgemäße Vorrichtung ist nachfolgend anhand eines Ausführungsbeispiels, das in den Figuren dargestellt ist, näher erläutert. Es zeigen:
- Fig. 1:: eine schematische Schaltskizze einer erfindungsgemäßen Vorrichtung,
- Fig. 2:: eine isometrische Ansicht einer Fördereinrichtung,
- Fig. 3:: eine isometrische Ansicht eines Förderelements, die Teil der Fördereinrichtung ist,
- Fig. 4:: eine Draufsicht auf das Förderelement, die mit drei Vorratsbehältern ausgestattet ist,
- Fig. 5:: eine Seitenansicht auf das Förderelement gemäß Figur 4,
- Fig. 6:: eine Draufsicht auf ein alternatives Förderelement,
- Fig. 7:: eine perspektivische Ansicht des Förderelements gemäß Figur 6,
- Fig. 8:: eine Draufsicht eines Wechselclips zur Montage des Förderelements gemäß Figur 6 an einer Wechselschiene und
- Fig. 9:: Draufsicht einer Wechselschiene zur Aufnahme einer Mehrzahl von Wechselclips.

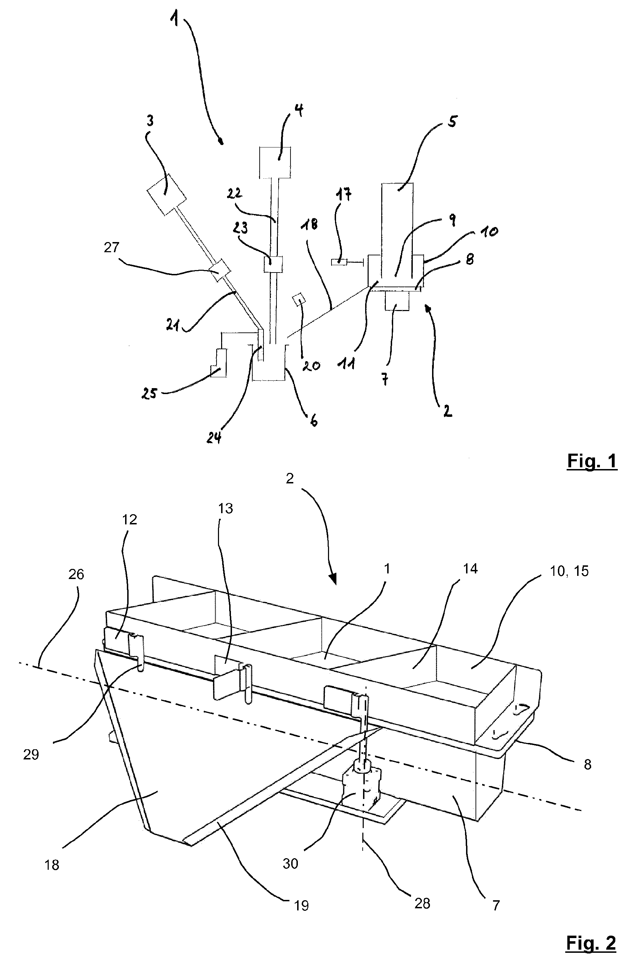

Ein Ausführungsbeispiel, das in den **Figuren 1 bis 5** dargestellt ist, umfasst eine Vorrichtung **1** zur Herstellung eines kakaohaltigen Heißgetränks. Die Vorrichtung **1** umfasst eine Fördereinrichtung **2**, eine Dampfquelle **3** sowie einen Fluidbehälter **4**. Weiterhin umfasst die Vorrichtung **1** drei Vorratsbehälters **5**, die mit der Fördereinrichtung **2** zusammenwirken. Außerdem weist die Vorrichtung **1** ein Mischgefäß **6** auf.

Die Fördereinrichtung **2** umfasst einen Linearförderer **7**, der mit einem Förderelement **8** zusammenwirkt. Das Förderelement **8** ist hier von einer Adaptierplatte gebildet. Diese ist dazu geeignet, eine Vibration, die mittels des Linearförderers **7** erzeugt wird, zu übertragen. Oberhalb des Förderelements **8** sind die Vorratsbehälter **5** platziert. Letztere sind in Form lang gestreckter Zylinder ausgeführt, die an einem unteren, dem Förderelement **8** zugewandten Ende, jeweils eine Öffnung **9** aufweisen. In den Vorratsbehältern **5** sind einzelne, zählbare, in den Figuren nicht dargestellte Schokoladenelemente vorhanden. Es versteht sich, dass durch Wirkung der Schwerkraft die Schokoladenelemente, die sich in den Vorratsbehältern **5** befinden, durch die Öffnung **9** hindurch auf das Förderelement **8** "fallen". Damit die Schokoladenelemente nicht zu den Seiten des Förderelements **8** hin das Förderelement **8** verlassen können, ist selbiges von Wandungen **10** eingefasst. Diese Wandungen 10 begrenzen hier insgesamt drei Förderbereiche **11**.

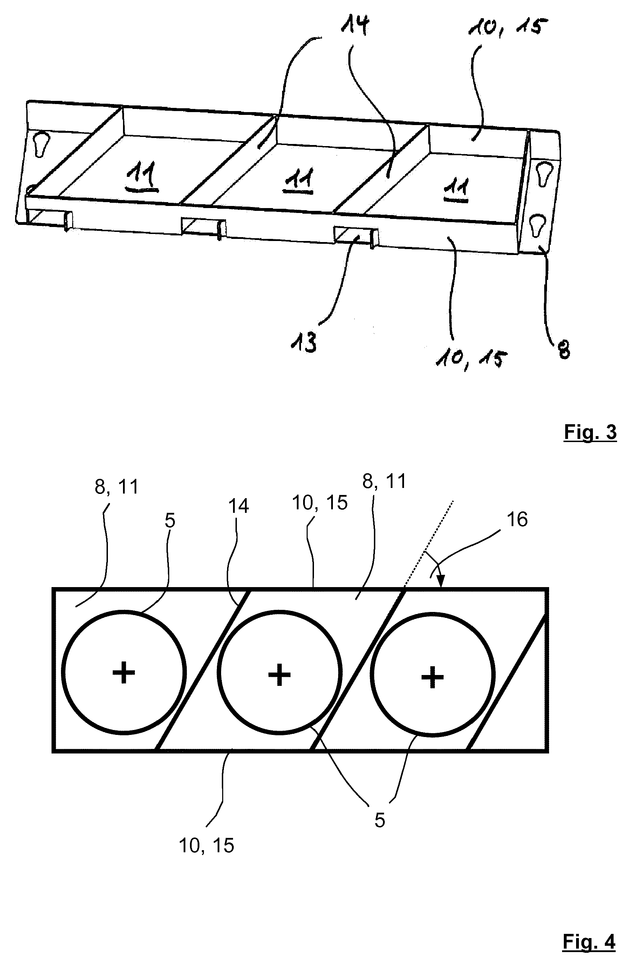

Die Wandungen **10** sind mit insgesamt drei Schließelemente **12** ausgestattet, wobei jeweils eines der Schließelemente **12** mit jeweils einem der Förderbereiche **11** zusammenwirkt. Die Schließelemente **12** sind hier in Form von Schwenkklappen ausgebildet, die derart relativ zu den Wandungen **10** bewegbar sind, dass in den Wandungen **10** vorhandene Öffnungen **13** mittels der Schließelemente **12** blockierbar sind. In den **Figuren 2** **und** **3** befinden sich eines der drei Schließelemente **12** in einer Offenstellung, in der es die zugehörige Öffnung **13** freigibt, während sich die übrigen Schließelemente **12** jeweils in einer Schließstellung befinden, in der sie die jeweilig zugehörigen Öffnungen **13** blockieren. Die Schließelemente **12** sind hier um eine Schwenkachse **28** verschwenkbar ausgeführt, wobei die Schließelemente **12** jeweils mit einer entsprechenden Welle **29** verbunden sind. Die Wellen **29** sind jeweils mittels einer Antriebseinrichtung **30** antreibbar. Bei Vorliegen dieser Offenstellung der Schließelemente **12** ist es folglich möglich, dass Schokoladenelemente, die sich in den Förderbereichen **11** befinden, durch die Öffnungen **13** hindurchtreten können. Die Wandungen **10** des Förderelements **8** umfassen ferner insgesamt drei Leitelemente **14**, die sich unter einem Winkel **16** zwischen äußeren Wandungen **15** erstrecken. Der Winkel **16** beträgt hier 55°. Die Leitelemente **14** sind hier von Leitblechen gebildet.

Die Schließelemente **12** sind in dem hier gezeigten Beispiel mit einer Betätigungseinheit **17** verbunden. Diese ist dazu geeignet, die Schließelemente **12** zwischen ihrer Offenstellung und ihrer Schließstellung zu bewegen. Insbesondere kann die Betätigungseinheit **17** in Abhängigkeit eine Anzahl geförderter einzelner Schokoladenelemente gesteuert werden, sodass bei Erreichen einer bestimmten Anzahl geförderter Schokoladenelemente sämtliche zu diesem Zeitpunkt geöffneten Schließelemente **12** in ihre Schließstellung überführt werden. Weiterhin ist es denkbar, dass mittels der Betätigungseinheit **17** einzelne Schließelemente **12** wechselweise geöffnet und geschlossen werden. Auf diese Weise ist es möglich, nacheinander Schokoladenelemente, die aus unterschiedlichen Förderbereichen **11** stammen, in das Mischgefäß **6** zu fördern, sodass eine in dem Mischgefäß **6** ausgebildete Portion von verschiedenen Schokoladenelementen bzw. von Schokoladenelementen verschiedener Schokoladenzubereitungen gebildet wird. Es versteht sich, dass sich durch ein solches Vorgehen besonders einfach eine Vielzahl verschiedener Geschmacksvariationen erzeugen lässt. Hierfür ist es lediglich notwendig, dass die einzelnen Vorratsbehälter **5** jeweils unterschiedliche Arten von Schokoladenzubereitungen, beispielsweise weiße Schokolade, Vollmilchschokolade und Bitterschokolade, beinhalten.

In einem Förderbetrieb der Vorrichtung **1** wird das Förderelement **8** mittels des Linearförderers **7** in eine lineare Schwingung versetzt, sodass das Förderelement **8** entlang einer in **Figur 4** dargestellten Längsachse **26** des Linearförderers **7** schwingt. Durch Wirkung dieser Vibration des Förderelements **8** werden Schokoladenelemente, die auf dem Förderelement **8** gelagert sind, in eine Bewegung versetzt. Die schräg angeordneten Leitelemente **14** verhelfen dazu, dass die Schokoladenelemente zu den Öffnungen **13** geleitet werden. Die Förderung der einzelnen Schokoladenelemente mittels einer Vibration ist insoweit besonders vorteilhaft, als "Verklebungen" bzw. "Brücken", die sich zwischen den Schokoladenelementen ausbilden können, durch Wirkung der Vibration "aufgebrochen" werden. Hierdurch ist sichergestellt, dass die Schokoladenelemente jeweils einzeln bewegt und folglich einzeln gefördert werden. Eine solche "einzelne Förderung" der Schokoladenelemente ist für eine korrekte Bildung einer jeweils gewünschten Portion von besonderer Bedeutung, da nur auf diese Weise sichergestellt werden kann, dass eine jeweils vorgegebene Anzahl von Schokoladenelementen in das Mischgefäß **6** gefördert wird. Die jeweils in das Mischgefäß **6** geförderten Schokoladenelemente bilden folglich gemeinsam eine Portion verschiedener Schokoladenzubereitungen.

Ausgehend von dem Förderelement **8** werden die Schokoladenelemente mittels einer Rutsche **18** transportiert. Diese ist derart gegenüber einer Horizontalen geneigt ausgeführt, dass die Schokoladenelemente auf einer Oberfläche der Rutsche **18** der Schwerkraft folgend nach unten rutschen. Um ein seitliches Herunterfallen der Schokoladenelemente von der Rutsche **18** zu unterbinden, weist diese entlang seitlicher Ränder Wandungen **19** auf. Die Rutsche **18** ist trichterförmig ausgebildet, sodass die Schokoladenelemente unabhängig davon, aus welchem der Förderbereiche **11** sie stammen, zu dem Mischgefäß **6** geleitet werden. Um eine Anzahl der Schokoladenelemente, die entlang der Rutsche **18** in das Mischgefäß **6** rutschen, zu erfassen, weist die Vorrichtung **1** eine Zähleinrichtung **20** auf. Diese Zähleinrichtung **20** ist hier in Form einer Lichtschranke ausgeführt. Diese Lichtschranke emittiert einen Lichtstrahl, der durch ein Schokoladenelement, dass sich entlang der Rutsche **18** bewegt, unterbrochen wird. In jedem Fall einer solchen Unterbrechung des Lichtstrahls löst die Zähleinrichtung **20** aus und erfasst auf diese Weise das jeweilige Schokoladenelement. Die Zähleinrichtung **20** ist mit einer nicht dargestellten Logikeinheit verbunden. Die Logikeinheit ist dazu geeignet, den Linearförderer **7** und die Schließelemente **12** zu steuern. Sobald die Zähleinrichtung **20** eine vorgegebene Anzahl an Schokoladenelementen erfasst, die bereits ausgehend von dem Förderelement **8** in das Mischgefäß **6** gefördert wurden, wird dies mittels der Logikeinheit registriert und der Linearförderer **7** deaktiviert und/oder die Schließelemente **12** in deren Schließstellungen überführt. Sobald dies der Fall ist befindet sich in dem Mischgefäß **6** eine vollständige Portion einer oder mehrerer Schokoladenzubereitungen.

Zusätzlich zu der Schokoladenzubereitung wird dem Mischgefäß **6** ein Mischfluid zugeleitet. Dieses Mischfluid ist in dem Fluidbehälter **4** bevorratet. Ausgehend von dem Fluidbehälter **4** wird das Mischfluid mittels einer Fluidleitung **22** dem Mischgefäß **6** zugeleitet. Um eine Menge des Mischfluids zu dosieren, kommt eine Pumpeinrichtung **23** zum Einsatz. Alternativ ist es ebenso denkbar, dass der Fluidbehälter **4** auf einem Höhenniveau angeordnet ist, das oberhalb des Mischgefäßes **6** liegt. Eine Zuleitung des Mischfluids in das Mischgefäß **6** kann sodann allein aufgrund der wirkenden Schwerkraft erfolgen. Eine Reihenfolge, in der dem Mischgefäß **6** die Schokoladenelemente und das Mischfluid zugeleitet werden, ist für den erfindungsgemäßen Erfolg grundsätzlich unerheblich. Gleichwohl ist es vorteilhaft, wenn dem Mischgefäß **6** zunächst die Schokoladenelemente und erst im Anschluss das Mischfluid zugeleitet werden. Dies liegt darin begründet, dass bei dieser Reihenfolge ein unbeabsichtigtes "Platschen" des Mischfluids infolge eines Hereinfallens der einzelnen Schokoladenelemente und ein damit verbundenes Spritzen des Mischfluids nicht auftreten können.

Ein mittels der Dampfquelle **3** erzeugter Dampfvolumenstrom wird dem Mischgefäß **6** mittels einer Dampfleitung **21** zugeleitet. Die Dampfleitung umfasst eine Ventileinrichtung **27**, mittels derer die Dampfleitung **21** nach Bedarf schließbar und öffenbar ist. Die Ventileinrichtung **27** ist hier von einem Magnetventil gebildet. Diese Zuleitung des Dampfvolumenstroms in das Mischgefäß **6** erfolgt unabhängig von dem Mischfluid. Dies ist im Hinblick auf einen reibungslosen Betrieb der Vorrichtung **1** zwar besonders vorteilhaft, für den erfindungsgemäßen Erfolg der Vorrichtung **1** jedoch nicht zwingend erforderlich. Somit ist es ebenfalls vorstellbar, dass der Dampfvolumenstrom und das Mischfluid bereits vor einem Eintritt in das Mischgefäß **6** vereinigt werden. Zur Erzeugung des Dampfvolumenstroms wird in aller Regel Wasser erwärmt und schließlich verdampft. Die Dampfquelle **3** ist zu diesem Zweck typischerweise von einem Dampfkessel gebildet. In dem vorliegenden Beispiel kommt ein Dampfkessel mit einem Volumen von 3 L und einer elektrischen Leistung von 2000 W zum Einsatz. Der mittels der Dampfquelle **3** erzeugte Dampfvolumenstrom weist eine Temperatur von ca. 120 °C auf. Es versteht sich, dass durch Einwirkung dieses Dampfvolumenstroms auf die Schokoladenelemente letztere aufgeschmolzen werden. Durch dieses Aufschmelzen werden die zunächst einzeln vorliegenden, festen, zählbaren Schokoladenelemente zu einer einheitlichen, fließfähigen Schokoladenmasse vereinigt. In dem Moment der Einleitung des Dampfvolumenstroms in das Mischgefäß **6** ist vorteilhafterweise auch des Mischfluid bereits in dem Mischgefäß **6** vorhanden. Dies hat zur Folge, dass gleichzeitig mit dem Aufschmelzen der Schokoladenelemente eine Vermischung der sodann flüssigen bzw. fließfähigen Schokoladenzubereitung mit dem Mischfluid stattfindet. Ferner wird das Mischfluid ebenso wie die Schokoladenelemente durch Wirkung des heißen Dampfvolumenstroms erwärmt.

Vorteilhafterweise wird der Dampfvolumenstrom mittels der Dampfleitung **21** zumindest anfänglich in einem bodennahen Bereich des Mischgefäßes **6** in selbiges eingeleitet, sodass auf einem Boden des Mischgefäßes **6** liegende Schokoladenelemente unmittelbar in Kontakt mit dem Dampfvolumenstrom treten und entsprechend zügig aufgeschmolzen werden. Ausgehend von dem bodennahen Bereich des Mischgefäßes **6** steigt der Dampf in dem Mischgefäß **6** bzw. in der sich ausbildenden Verbindung aus aufgeschmolzener Schokolade und dem Mischfluid nach oben auf. Im Zuge dieses Aufstiegs des Dampfes wird zumindest der Anteil der Schokoladenelemente, der bereits aufgeschmolzen ist, mit dem Mischfluid vermischt. Dem Dampfvolumenstrom kommt folglich eine Doppelfunktion zu: zum einen dient er der Erwärmung der Schokoladenzubereitung sowie des Mischfluids und folglich der Bereitstellung eines "Heißgetränks", zum anderen dient er der Vermischung des Mischfluids mit der aufgeschmolzener Schokoladenzubereitung.

In dem gezeigten Beispiel tritt der Dampfvolumenstrom durch eine Dampflanze **24** in das Mischgefäß **6** ein. Die Dampflanze **24**, die sich hierzu an einem der Dampfquelle **3** abgewandten Ende der Dampfleitung **21** befindet, ist mittels einer Antriebseinrichtung **25** vertikal bewegbar. Das heißt, dass es mittels der Antriebseinrichtung **25** möglich ist, die Dampflanze **24** während einer Einleitung des Dampfvolumenstroms in das Mischgefäß **6** zu bewegen. Eine solche Bewegung wird vorteilhafterweise ausgehend von einer Tiefstelle, in der sich eine Austrittsöffnung der Dampflanze **24** knapp oberhalb des Bodens des Mischgefäßes **6** befindet, vertikal nach oben verfahren. Diese Bewegung der Dampflanze hat den Vorteil, dass der Dampfvolumenstrom auf unterschiedlichen Höhenniveaus in das sich bildende Heißgetränk eingeleitet wird. Es hat sich ergeben, dass dieses Vorgehen für eine Vermischungswirkung des Dampfvolumenstroms von Vorteil ist.

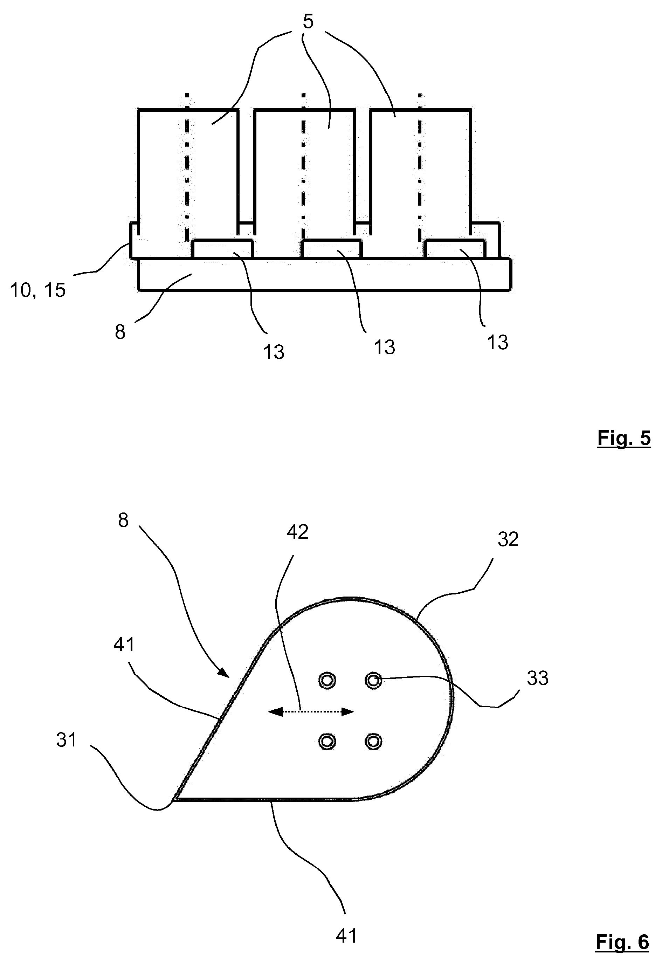

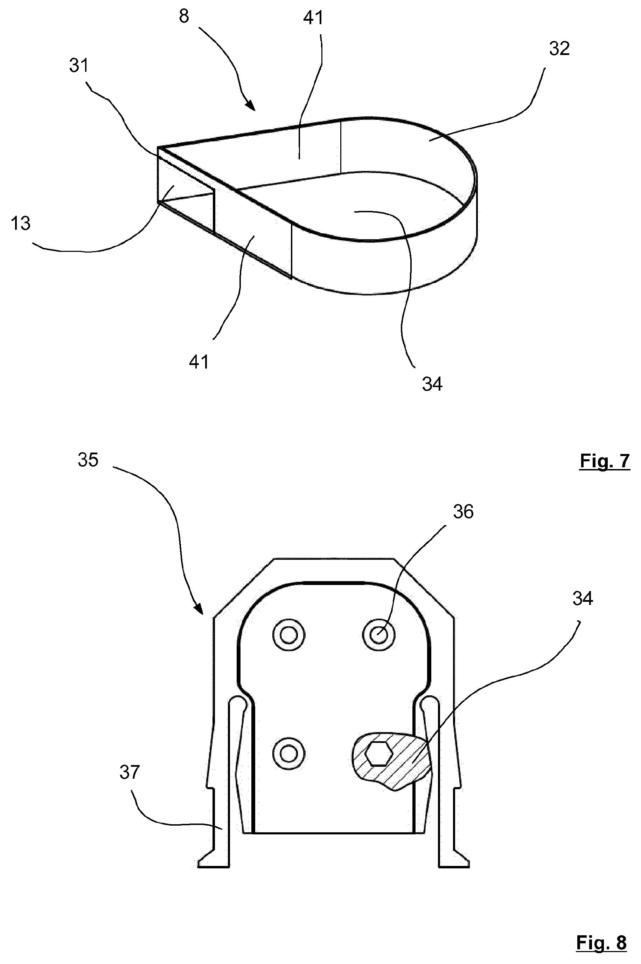

Ein weiteres Ausführungsbeispiel, das in Teilen in den **Figuren 6 bis 9** dargestellt ist, unterscheidet sich insofern von dem vorstehend erläuterten Ausführungsbeispiel, als die Fördereinrichtungen **2** insgesamt drei separate Förderelement **8** aufweist, die unabhängig voneinander auf einer Aufnahmeschiene **38** angeordnet sind. Eine Draufsicht eines solchen Förderelements **8** ist insbesondere aus **Figur 6** erkennbar. Eine isometrische Ansicht ergibt sich zudem aus **Figur 7**. Das andersartige Förderelement **8** umfasst einen Boden **34**, der sich zumindest im Wesentlichen horizontal erstreckt, sowie eine umlaufende, senkrecht zu dem Boden **34** auf stehende Wandung **32**. Der Boden **34** und die Wandung **32** begrenzen gemeinsam einen Förderraum des Förderelements **8**, in den die Schokoladenelemente ausgehend von einem jeweils zugewiesenen Vorratsbehälter **5** eingegeben werden können. Die Wandung **32** weist eine Öffnung **13** auf, durch die hindurch die Schokoladenelemente das Förderelement **8** verlassen können.

Während eines Betriebs der Fördereinrichtungen **2** wird das Förderelement **8** insgesamt in eine Schwingung versetzt, wodurch auf dem Boden **34** des Förderelements **8** aufliegende Schokoladenelemente gleichermaßen angeregt werden. Die Anregung des Förderelements **8** wird in dem gezeigten Beispiel mittelbar mittels eines Linearförderers **7** vorgenommen, wobei eine Schwingungsrichtung des Förderelements **8** mittels des in **Figur 6** dargestellten Doppelfiles **42** veranschaulicht ist. Bedingt durch die aufgebrachte Schwingung werden die Schokoladenelemente gefördert, wobei die Schwingung des Förderelements **8** dazu beiträgt, dass eventuelle, sich zwischen den Schokoladenelementen ausgebildete "Brücken" aufgebrochen werden. Die Wandung **32** ist erkennbar derart ausgebildet, dass sie mit geraden Wandabschnitten **41** gewissermaßen auf die Öffnung **13** zugespitzt ist, sodass die geraden Wandabschnitten **41** eine Leitfunktion für die in Schwingung versetzen Schokoladenelemente übernehmen. Im Ergebnis führt dies dazu, dass die Schokoladenelemente gewissermaßen auf die Öffnung **13** zugeführt werden und folglich zielgerichtet das Förderelement **8** verlassen können.

Die im Übrigen frei von Ecken ausgeführte Wandung **32** hat den besonderen Vorteil, dass die einzelnen Schokoladenelemente sich nicht in Eckbereichen bzw. gewissermaßen in "Totwassergebieten" dauerhaft aufhalten können. Auf diese Weise ist sichergestellt, dass jedes Schokoladenelement, das das Förderelement **8** erreicht, nach einer gewissen Umschlagzeit das Förderelement **8** auch wieder verlässt. Auf diese Weise lässt sich vermeiden, dass möglicherweise einzelne über die Zeit verdorbenen Schokoladenelementen in ein zuzubereitendes kakaohaltiges Heißgetränk gelangen.

Die einzige Ecke der Wandung **32** befindet sich an einer Stoßkante **31**, an der sich gewissermaßen die beiden voneinander abgewandten Enden der Wandung **32** treffen und aneinander stoßen. Die Ecke an der Stoßkante **31** ist unter dem vorstehend beschriebenen Aspekt einer möglichen Verkantung von Schokoladenelementen und einem dadurch bedingten verlängerten Durchlauf eines jeweiligen Schokoladenelements durch die Vorrichtung **1** nicht problematisch, da die Öffnung **13** unmittelbar an der Stoßkante **31** ausgebildet ist. Eine solche Ausführung ist demzufolge auch von besonderem Vorteil.

Wie sich insbesondere aus **Figur 6** ergibt, verfügt das Förderelement **8** über insgesamt vier Bohrungen **33**, die dazu geeignet sind, jeweils ein Verbindungsmittel aufzunehmen, mittels dessen das Förderelement **8** an ein weiteres Bauteil in Kraft übertragender Weise angeschlossen werden kann. In dem gezeigten Beispiel wirken die einzelnen Förderelemente **8** jeweils mit einem Wechselclip **35** zusammen, der sich insbesondere aus **Figur 8** ergibt. Es ist erkennbar, dass der Wechselclip **35** seinerseits ebenfalls über Bohrungen **36** verfügt, die mit den Bohrungen **33** eines jeweiligen Förderelement **8** korrespondieren. In **Figur 8** ist der Boden **34** eines Förderelements **8** schematisch mittels einer Bruchdarstellung angedeutet.

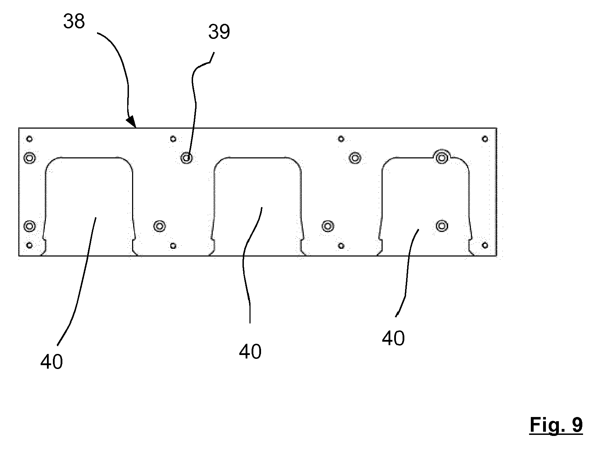

Der Wechselclip **35** ist dazu geeignet, formschlüssig mit einer Aufnahmeschiene **38** einzugreifen, die sich hier beispielhaft aus **Figur 9** ergibt. Der Wechselclip **35** ist dabei insoweit von Vorteil, als er eine besonders zügige, werkzeuglose Montage des jeweiligen Förderelements **8** an der Aufnahmeschiene **38** erlaubt. Hierzu verfügt der Wechselclip **35** über zwei sich gegenüberliegende Rastnasen **37**, die durch Aufbringung einer Montagekraft elastisch verformt werden können. Mittels einer solchen Verformung der Rastnasen **37** ist es möglich, den Wechselclip **35** in einen zugehörigen Aufnahmeslot **40** der Aufnahmeschiene **38** einzuführen und sodann dort formschlüssig einzurasten. Um den Wechselclip **35** anschließend wieder aus dem Aufnahmeslot **40** zu lösen, ist es lediglich erforderlich, die Rastnasen **37** aufeinander zu zu drücken und den jeweiligen Wechselclip **35** anschließend aus dem Aufnahmeslot **40** herauszuziehen. Diese Ausführung ermöglicht es, ein jeweiliges Förderelements **8** besonders einfach entnehmen und wechseln zu können. Dies ist insbesondere im Hinblick auf eine unkomplizierte Reinigung eines jeweiligen Förderelements **8** von besonderem Vorteil.

Die Aufnahmeschiene **38** ist ihrerseits ebenfalls mit Bohrungen **39** versehen, die geeignet sind, eine kraftübertragende Befestigung der Aufnahmeschiene **38** an der übrigen Fördereinrichtungen **2**, die in den **Figuren 6 bis 9** nicht dargestellt ist, zu bewerkstelligen. Insbesondere kann die Aufnahmeschiene **38** unmittelbar an eine Vibrationseinheit der Fördereinrichtungen **2** angeschlossen werden, sodass die Aufnahmeschiene **38** mitsamt den Wechselclips **35** und folglich den Aufnahmeelementen **8** in eine Schwingung versetzbar sind.

Es versteht sich, dass die vorstehend im Zusammenhang mit den Ausführungsbeispielen beschriebenen Merkmale grundsätzlich auch unabhängig voneinander ausführbar sind und von Vorteil sein können. Die hier offenbarte Kombination im Rahmen der Ausführungsbeispiele ist insoweit nicht zwingend; im Gegenteil sind auch alle übrigen Kombinationen der offenbarten Merkmale denkbar, sofern dies dem Fachmann sinnvoll erscheint oder erscheinen muss.

### Bezugszeichenliste

- 1: Vorrichtung
- 2: Fördereinrichtung
- 3: Dampfquelle
- 4: Fluidbehälter
- 5: Vorratsbehälter
- 6: Mischgefäß
- 7: Linearförderer
- 8: Förderelement
- 9: Öffnung
- 10: Wandung
- 11: Förderbereich
- 12: Schließelement
- 13: Öffnung
- 14: Leitelement
- 15: Wandung
- 16: Winkel
- 17: Betätigungseinheit
- 18: Rutsche
- 19: Wandung
- 20: Zähleinrichtung
- 21: Dampfleitung
- 22: Fluidleitung
- 23: Pumpeinrichtung
- 24: Dampflanze
- 25: Antriebseinrichtung
- 26: Längsachse
- 27: Ventileinrichtung
- 28: Schwenkachse
- 29: Welle
- 30: Antriebseinrichtung
- 31: Spitze
- 32: Wandung
- 33: Bohrung
- 34: Boden
- 35: Wechselclip
- 36: Bohrung
- 37: Rastnase
- 38: Aufnahmeschiene
- 39: Bohrung
- 40: Aufnahmeslot
- 41: Wandabschnitt
- 42: Doppelpfeil

## Patentansprüche

1. Vorrichtung (1) zur Herstellung eines kakaohaltigen Heißgetränks, umfassend mindestens einen Vorratsbehälter (5), in dem eine in festem Zustand vorliegende Schokoladenzubereitung bevorratbar ist,
mindestens eine Fördereinrichtung (2) zur zumindest mittelbaren Förderung einer Portion der Schokoladenzubereitung in mindestens ein Mischgefäß (6), mindestens eine Dampfquelle (3) zur Bereitstellung eines Dampfvolumenstroms, sowie mindestens eine Dampfleitung (21) zur Leitung des Dampfvolumenstroms in Richtung des Mischgefäßes (6),
wobei zumindest die in dem Mischgefäß (6) befindliche Portion der Schokoladenzubereitung von einer Mehrzahl zählbarer Schokoladenelemente gebildet ist,
**dadurch gekennzeichnet, dass**
die Fördereinrichtung (2) mindestens ein Förderelement (8) aufweist, auf dem eine Mehrzahl von Schokoladenelementen lagerbar ist, wobei das Förderelement (8) derart in eine Schwingung versetzbar ist, dass die Schokoladenelemente förderbar sind.

2. Vorrichtung (1) nach Anspruch 1, **dadurch gekennzeichnet, dass** die Fördereinrichtung (2) einen Linearförderer (7) umfasst, mittels dessen das Förderelement (8) in eine lineare Schwingung, insbesondere eine horizontale Schwingung, versetzbar ist.

3. Vorrichtung (1) nach Anspruch 1 oder 2, **dadurch gekennzeichnet, dass** das Förderelement (8) in eine zumindest anteilig vertikale Schwingung versetzbar ist, wobei vorzugsweise das Förderelement (8) zyklisch um eine horizontale Schwenkachse verschwenkbar ist.

4. Vorrichtung (1) nach einem der Ansprüche 1 bis 3, **dadurch gekennzeichnet, dass** das Förderelement (8) mit mindestens einem Leitelement (14) zusammenwirkt, mittels dessen die Schokoladenelemente im Zuge ihrer Förderung in eine Richtung leitbar sind, die vorzugsweise von einer Richtung abweicht, in der das Förderelement (8) schwingt.

5. Vorrichtung (1) nach Anspruch 4, wobei das Förderelement (8) in eine lineare Schwingung versetzbar ist, insbesondere in eine horizontale Schwingung, **dadurch gekennzeichnet, dass** das Leitelement (14) von einem auf dem Förderelement (8) aufstehenden Leitblech gebildet ist, dessen Längsachse mit einer Schwingungsachse der Fördereinrichtung (2) einen Winkel (16) im Bereich zwischen 30° und 70°, vorzugsweise zwischen 35° und 65°, weiter vorzugsweise zwischen 40° und 60°, einschließt.

6. Vorrichtung (1) nach einem der Ansprüche 1 bis 5, **gekennzeichnet durch** eine Mehrzahl von Vorratsbehältern (5), in denen unterschiedliche Schokoladenzubereitungen bevorratbar sind, wobei die Fördereinrichtung (2) eine Mehrzahl an Förderbereichen (11) aufweist und wobei zumindest jeweils ein Förderbereich (11) jeweils einem Vorratsbehälter (5) zugeordnet ist.

7. Vorrichtung (1) nach Anspruch 6, **gekennzeichnet durch** eine Mehrzahl von Förderelementen (8), wobei jeweils ein Förderelement (8) einem Vorratsbehälter (5) zugeordnet ist und wobei vorzugsweise jedes Förderelement (8) derart mit einer umlaufenden Wandung versehen ist, dass auf dem Förderelement (8) befindliche Schokoladenelemente im Zuge einer Förderung in Richtung einer Öffnung (13) leitbar sind, wobei die umlaufende Wandung vorzugsweise abgerundet ausgeführt ist.

8. Vorrichtung (1) nach einem der Ansprüche 1 bis 7, **gekennzeichnet durch** eine Zähleinrichtung (20), mittels derer eine Anzahl geförderter Schokoladenelemente erfassbar ist, wobei die Zähleinrichtung (20) vorzugsweise von einer Lichtschranke gebildet ist.

9. Vorrichtung (1) nach Anspruch 8, **gekennzeichnet durch** eine Logikeinheit, die mit der Zähleinrichtung (20) verbunden ist und mittels derer die Fördereinrichtung (2) bei Erreichen einer vorgegebenen Portionszahl mittels der Zähleinrichtung (20) erfasster Schokoladenelemente deaktivierbar ist.

10. Verfahren zur Herstellung eines kakaohaltigen Heißgetränks umfassend die folgenden Verfahrensschritte:
a) Ausgehend von einem Vorratsbehälter (5) wird eine Portion einer Schokoladenzubereitung mittels einer Fördereinrichtung (2) in ein Mischgefäß (6) gefördert.
b) Ausgehend von einer Dampfquelle (3) wird ein Dampfvolumenstrom mittels einer Dampfleitung (21) in Richtung des Mischgefäßes (6) geleitet.
c) Zumindest ein Teil der Portion der Schokoladenzubereitung wird zumindest mittelbar mittels des Dampfvolumenstroms erwärmt und dadurch aufgeschmolzen, sodass zumindest der Teil der Portion der Schokoladenzubereitung ausgehend von seinem festen Zustand in einen flüssigen Zustand überführt wird,
**gekennzeichnet durch** den folgenden Verfahrensschritt:
d) Zumindest ein Teil der Portion der Schokoladenzubereitung wird **dadurch** gefördert, dass mindestens ein Förderelement (8) der Fördereinrichtung (2), auf dem sich zumindest der Teil der Portion befindet, in eine Schwingung versetzt wird.

11. Verfahren nach Anspruch 10, **gekennzeichnet durch** die folgenden Verfahrensschritte:
e) Die Portion der Schokoladenzubereitung wird in dem Mischgefäß (6) aufgeschmolzen.
f) Zumindest ein aufgeschmolzener Teil der in dem Mischgefäß (6) befindlichen Schokoladenzubereitung wird mit einem Mischfluid vermischt, vorzugsweise **durch** Wirkung eines in das Mischgefäß (6) eingeleiteten Dampfvolumenstroms.

12. Verfahren nach Anspruch 11, **dadurch gekennzeichnet, dass** das Förderelement in eine lineare Schwingung versetzt wird, insbesondere eine horizontale oder eine zumindest anteilig vertikale Schwingung.

13. Verfahren nach Anspruch 12, **dadurch gekennzeichnet, dass** das Förderelement (8) mit einer Frequenz von mindestens 25 Hz, vorzugsweise von mindestens 30 Hz, weiter vorzugsweise von mindestens 35 Hz, angeregt wird, wobei die Frequenz vorzugsweise im Laufe eines Betriebs der Vorrichtung (1) verändert werden kann.

14. Verfahren nach einem der Ansprüche 10 bis 13, wobei die Portion der Schokoladenzubereitung von einer Mehrzahl zählbarer Schokoladenelemente gebildet ist, **dadurch gekennzeichnet, dass** eine Anzahl von Schokoladenelementen, die zur Bildung einer Portion in das Mischgefäß (6) gefördert werden, erfasst wird, wobei vorzugsweise die Fördereinrichtung (2) bei Erreichen einer vorgegebenen Portionszahl zu fördernder Schokoladenelemente deaktiviert wird.

15. Verfahren nach einem der Ansprüche 10 bis 14, **dadurch gekennzeichnet, dass** eine in dem Mischgefäß zu bildende Portion von Schokoladenzubereitung von einer Mischung mehrerer Teilportionen unterschiedlicher Schokoladenzubereitungen gebildet wird, wobei vorzugsweise nacheinander jeweils eine Teilportion einer Schokoladenzubereitung in das Mischgefäß (6) gefördert wird.
